(19) **Europäisches Patentamt / European Patent Office / Office européen des brevets**

(11) **EP 1 312 226 B1**

(12) **EUROPEAN PATENT SPECIFICATION**

(45) Date of publication and mention
of the grant of the patent:
**06.05.2009 Bulletin 2009/19**

(21) Application number: **01958734.4**

(22) Date of filing: **31.07.2001**

(51) Int Cl.:
*H04Q 3/00* (2006.01)     *H04L 12/56* (2006.01)

(86) International application number:
**PCT/SE2001/001693**

(87) International publication number:
**WO 2002/011461 (07.02.2002 Gazette 2002/06)**

(54) **DYNAMIC QoS MANAGEMENT IN DIFFERENTIATED SERVICES USING BANDWIDTH BROKERS, RSVP AGGREGATION AND LOAD CONTROL PROTOCOLS**

DYNAMISCHE QoS-VERWALTUNG IN DIFFERENZIERTEN DIENSTEN UNTER VERWENDUNG VON BANDBREITEN-MAKLERN, RSVP-AGGREGATION UND LASTSTEUERUNGSPROTOKOLLEN

GESTION DYNAMIQUE DE QUALITE DE SERVICE DANS DES SERVICES DIFFERENCIES UTILISANT DES INTERMEDIAIRES DE BANDE PASSANTE, DES PROTOCOLES D'AGREGATION DE RSVP ET DE CONTROLE DE CHARGE

(84) Designated Contracting States:
**AT BE CH CY DE DK ES FI FR GB GR IE IT LI LU MC NL PT SE TR**

(30) Priority: **31.07.2000 US 221773 P**

(43) Date of publication of application:
**21.05.2003 Bulletin 2003/21**

(73) Proprietor: **TELEFONAKTIEBOLAGET LM ERICSSON (publ)**
**164 83 Stockholm (SE)**

(72) Inventors:
• **WESTBERG, Lars**
  **S-745 96 Enköping (SE)**
• **ERIKSSON, Anders**
  **S-164 36 Kista (SE)**
• **KARAGIANNIS, Georgios**
  **D-7161 PJ Neede (NL)**
• **HEIJENK, Geert**
  **NL-7541 ZJ Enschede (NL)**
• **REXHEPI, Vlora**
  **NL-7523 SB Enschede (NL)**
• **PARTAIN, David**
  **S-583 34 Linköping (SE)**

(74) Representative: **Tonscheidt, Andreas**
**Ericsson GmbH**
**Ericsson Allee 1**
**52134 Herzogenrath (DE)**

(56) References cited:
**WO-A-00/30295**

• **BERNET Y ET AL: "Differentiated Services" A FRAMEWORK FOR DIFFERENTIATED SERVICES, [Online] February 1999 (1999-02), pages 1-32, XP002902254 Retrieved from the Internet: <URL:draft-ietf-diffserv-framework-02.txt. > [retrieved on 2002-01-14]**
• **MAMELI R ET AL: "SIP/QoS demonstration" 3RD SIP WORKSHOP, 24 - 25 May 2000, XP002902255 Stockholm**
• **GRANGES E A: BANDWIDTH BROKER FOR DIFFERENTIATED SERVICES, [Online] March 2000 (2000-03), XP002902270 Retrieved from the Internet: <URL:http://iamwww.unibe.ch/ rvs/ publications/mainpage.html> [retrieved on 2002-01-14]**
• **NEILSON R ET AL: "A discussion of bandwidth broker requirements for internet2 qbone deployment" INTERNET2 QBONE BB ADVISORY COUNCIL, August 1999 (1999-08), pages 1-30, XP002902271**
• **KARAGIANNIS G ET AL: "Ericsson open report No. 9/036-FCPNB 10288 Uen" A FRAMEWORK FOR QOS & MOBILITY IN THE INTERNET NEXT GENERATION, 6 September 2000 (2000-09-06), pages 1-52, XP002902272**

**Description**

**Field of the Invention**

This invention relates generally to providing Quality of Service (QoS) in Internet Protocol networks, and more particularly it relates to providing dynamically and on demand end to end QoS in Internet Protocol networks using RSVP aggregation and load control.

The text herein makes reference to several protocols and standard-like publications which include, but are not limited to, the following RFC numbers: 1633, 1905, 2748 2205, 2210, 2475, 2597, 2598, 2638, 2748 and 2998. A complete list of references relied upon herein is attached at the end of the text.

**BACKGROUND OF THE INVENTION**

The diversity of the current Internet applications from the most simple ones like e-maxling and web browsing going to high demanding real time applications like IP telephony and multimedia conferencing, has raised the expectations that both users and software developers of these applications have from the Internet. On the other hand, in such a highly competitive environment as the Internet Service Providers= (ISPs) world, satisfying customer needs, regardless of whether they are other ISPs or end users is key to their survival. Therefore the ISP=s zeal to provide value-added services to their customers is growing immensely. These demands have led to evolution of QoS on Internet as a necessity. Enabling QoS on the best effort Internet model introduces complexity in several aspects, starting from not only applications, different networking layers and network architectures but also in network management and business models. All these aspects have been major research topics over the past few years. Finding an efficient solution for end-to-end QoS over Internet i.e. the IP networks that will satisfy both ISPs and their customers is a tough venture. The efforts to enable end-to-end QoS over IP networks have led to the development of two different architectures, the Integrated Services architecture and more recently, the Differentiated Services architecture.

**INTEGRATED SERVICES ARCHITECTURE**

Integrated Services (Intserv) architecture [RFC 1633] uses an explicit mechanism to signal per-flow QoS requirements to network elements (hosts, routers). Network elements, depending on the available resources, implement one of the defined Intserv services (Guaranteed or Control Load service) based on which QoS will be delivered in the data transmission path. Another protocol known as the RSVP signaling protocol [RFC2205], [RFC2210] was designed as a dynamic mechanism for explicit reservation of resources in Intserv, although Intserv can use other mechanisms as well. It is initiated by an application at the beginning of a communication session. But, even though Intserv is deigned to provide end-to-end QoS it is currently not widely deployed, as fairly well known now, due to maintenance and control of per-flow states and classification; reserving resources per-flow introduces severe scalability problems at the core networks, where the number of processed flows is in the millions range. Consequently, the use of the Integrated Services architecture is limited to small access networks where the number of flows using reservations is modest.

**RSVP**

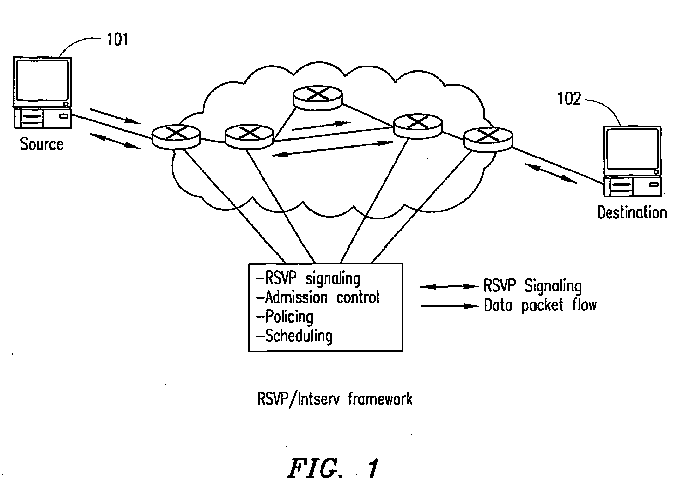

The Resource Reservation Protocol (RSVP) (which is explained in references [RFC2210], [DuYa99]) is a signaling protocol that can be used by an application to inform its QoS requirements to an Internet infrastructure. RSVP is initiated by an application at the beginning of a communication session. A communication session is identified by a combination of the IP destination address, transport layer protocol type and the destination port number. 'RSVP' as used herein is meant to include any and all modifications of what is known as RSVP. A simplified RSVP/Intserv framework is illustrated in Figure 1. As shown, every RSVP aware router in the Intserv will be able to perform RSVP signaling, admission control, policing and scheduling.

The resources reserved by the RSVP for a certain communication session will be used for all packets belonging to that particular session. Therefore, all RSVP packets will include details of the session they belong to. The main RSVP messages are the PATH and RESV messages. The PATH message is sent by a source that initiates the communication session and it explicitly binds the data path of a flow. Furthermore, it describes the capabilities of the source. The RESV message is issued by the receiver of the communication session and it follows exactly the path that the RSVP PATH message has followed hop by hop back to the communication session source. The RESV message on its way back to the source, may install QoS states at each hop. These states are associated with the specific QoS resource requirements of the destination. The RSVP reservation states are temporary states, i.e., soft states, that have to be updated regularly. This means that PATH and RESV messages will have to be periodically retransmitted. If these states are not refreshed then they will be removed.

The RSVP protocol uses additional messages that are used to either provide information about the QoS state or to explicitly delete the QoS states along the communication session path. This invention envisages the use and application of RSVP protocol.

The RSVP message functions and their meaning are given in Table 1.

Table 1: The RSVP messages

| RSVP Messages | |
|---|---|
| **RSVP Message Name** | **RSVP Message Function** |
| PATH | The PATH message is sent by a source 101 (figure 1) that initiates the communication session to destination 102 and it explicitly binds the data path of a flow. Furthermore, it describes the capabilities of the source. |
| RESV | The RESV message is issued by the receiver of the communication session and it follows exactly the path that the RSVP PATH message has followed hop by hop back to the communication session source. The RESV message on its way back to the source may install QoS states at each hop. These states are associated with the specific QoS resource requirements of the destination. The RSVP reservation states are temporary states, i.e., soft states, that have to be updated regularly. |
| PATH Error | Is used to report errors that are occurring during the installation of a path from the source to the destination 102, in figure 1, of a communication session. |
| RESV Error | Is used to report errors that are occurring during the installation of the reservation states along the communication session path. |
| RESV Confirm | It provides a positive indication to the initiator of the communication session informing that all nodes along the communication session path accepted the reservation request. The RSVP Confirmation messages are typically sent by the source of the communication session directly to the destination of this communication session. Intermediate nodes do not process RSVP confirmation messages. |
| PATH Tear | Is sent by the source of the communication session and it explicitly deletes the stored QoS state information on all nodes included in a communication session path. |
| RESV Tear | Is sent by the destination of the communication session and it explicitly deletes the stored QoS state information on all nodes included in a communication session path. |

## DIFFERENTIATED SERVICES ARCHITECTURE

Differentiated Services (Diffserv) architecture [RFC2475], [RFC2638], was introduced as a result of the efforts to avoid the scalability and complexity problems of Intserv.

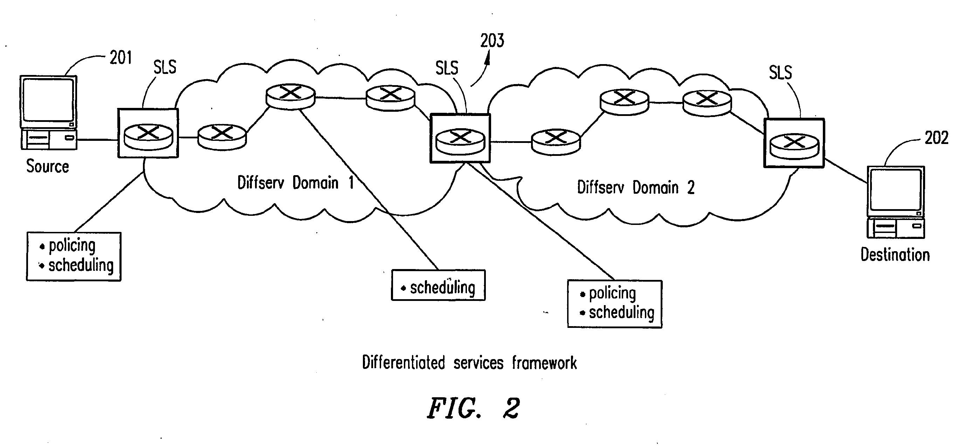

In Diffserv, per-flow state is pushed to the edges, and the traffic through Diffserv routers is treated on an aggregate basis. Service differentiation is achieved by means of Differentiated Service (DS) field in the IP header and the Per-Hop Behaviour (PHB) as main building blocks. At each node, packets are handled according to the PHB invoked by the DS byte in the packet header. The PHB defines the externally observable behaviour at the node. Two PHBs have been defined, the assured forwarding (AF-) PHB [RFC2597] and the expedited forwarding (EF-) PHB [RFC2598]. The Diffserv domain will provide to its customer, which is a host or another domain, the required service by complying fully with the agreed Service Level Agreement (SLA). SLA is a bilateral agreement between the boundary domains negotiated either statically or dynamically. The transit service to be provided with accompanying parameters like transmit capacity, burst size and peak rate, is specified in the technical part of the SLA, i.e. the Service Level Specification (SLS), shown at 203 in figure 2. The Diffserv architecture is certainly promising, but there are several open issues related to intra-domain resource allocation mechanisms and inter-domain communication in case of dynamic resource provisioning that need to be defined and researched. The simplified Diffserv framework is generally illustrated in Figure 2.

The Diffserv architecture may use different types of protocols to dynamically reserve resources into the Diffserv domain. The main ones are the RSVP, RSVP aggregation and Load Control protocols.

## RSVP Aggregation

The RSVP aggregation concept is used to reduce the Intserv scalability problems by extending the RSVP protocol with facilities for aggregation of individual reserved sessions into a common class and across transit domains. It describes mechanisms for dynamic creation of the aggregate reservation, classification of the traffic for which the aggregate reservation applies, determination of the bandwidth needed to achieve the requirement and recovery of the bandwidth when the sub-reservations are no longer required. An RSVP aggregated session is identified by the IP destination address, the protocol ID and Differentiated Services Code Points (DSCP) information. Furthermore, for classification and scheduling of traffic supported by aggregate reservations, Diffserv mechanisms are used. Diffserv DSCPs are used to identify traffic covered by aggregate reservations and, one or more Diffserv PHB's are used to offer the required forwarding treatment to this traffic.

The first router in the transit domain that handles the aggregated reservations is called Aggregator, while the last router in the transit domain that handles the reservations is called Deaggregator. An RSVP aggregation region comprises routers that are capable of managing the RSVP aggregated states.

The RSVP aggregation concept can be used either when RSVP is applied end to end or edge to edge. In the latter case the Aggregator can use a policy that can be based on local configurations and local QoS management architectures, to set the DSCP packets that are passing into the aggregated region. For example, the Aggregator may be a PSTN (Public Switched Telephone Network) gateway that aggregates a set of incoming calls and makes an aggregate reservation across one or more Diffserv domains up to the Deaggregator that can be e.g., another PSTN gateway. In this situation, call signaling is used to establish the E2E reservations.

From the above information it can be deduced that based on a certain policy the Aggregator and Deaggregator will decide when the RSVP Aggregated states will be refreshed or updated and therefore this triggering time is not completely defined by the E2E RSVP messages.

Within an aggregation region three possible scenarios can be distinguished.

SIGNALING FLOW FOR THE FIRST E2E FLOW

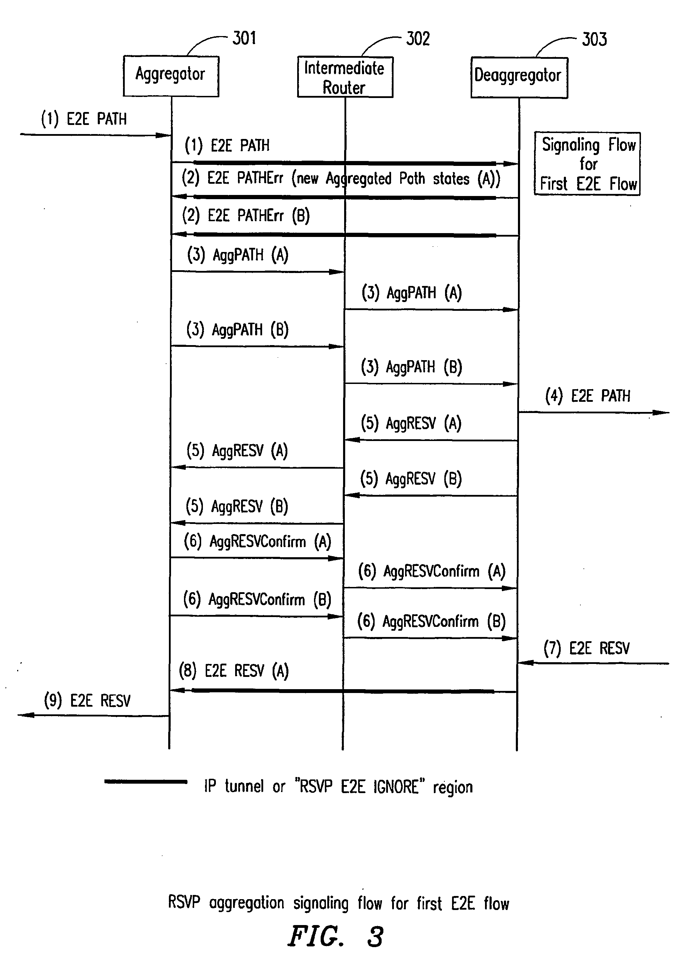

The flow diagram depicted in Figure 3 illustrates a detailed flow of RSVP messages in the case when there is no Aggregated PATH between the Aggregator 301 and the Deaggregator 303. Also shown is the location of an Intermediate Router 302. The number of the Aggregated PATH states that will have to be installed in each router depends on the number of the supported DSCPs. In figure 3 it is considered that two DSCPs are supported, e.g., EF and AF PHB's, and therefore, two RSVP PATH aggregated states have to be created. The symbols (A) and (B) in the flow diagram represent new aggregation values needed for the different supported DCSP's. The E2E RSVP messages transport the value that identifies a particular DSCP (e.g., PHB) type in the DCLASS object.

SIGNALING FLOW FOR SUBSEQUENT E2E FLOW WITHOUT PRESERVATION RESIZING

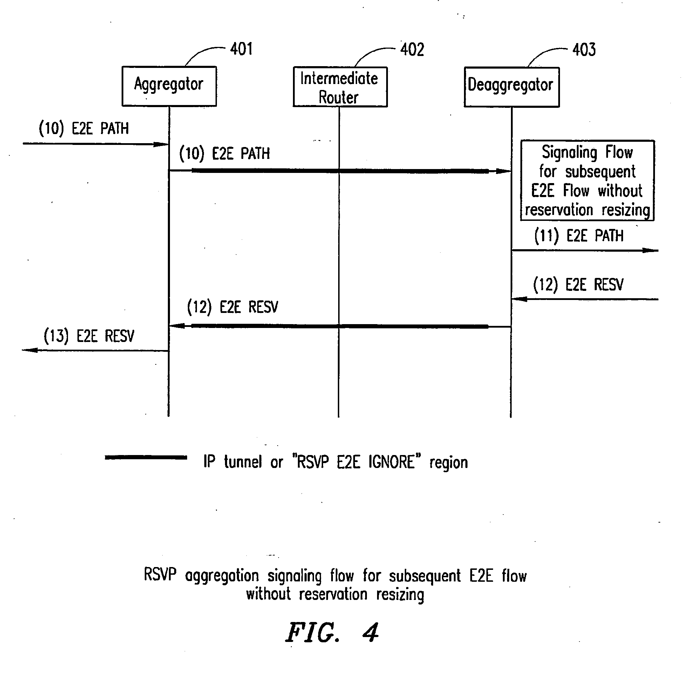

Figure 4 illustrates a detailed flow of RSVP messages in the case that there already exists an Aggregated PATH between the Aggregator 401 and Deaggregator 403, and there is no need for a change in the RSVP aggregated reservation. The E2E RSVP messages transport the value that identifies a particular DSCP (e.g., PHB) type in the DCLASS object.

SIGNALING FLOW FOR SUBSEQUENT E2E FLOW WITH RESERVATION RESIZING

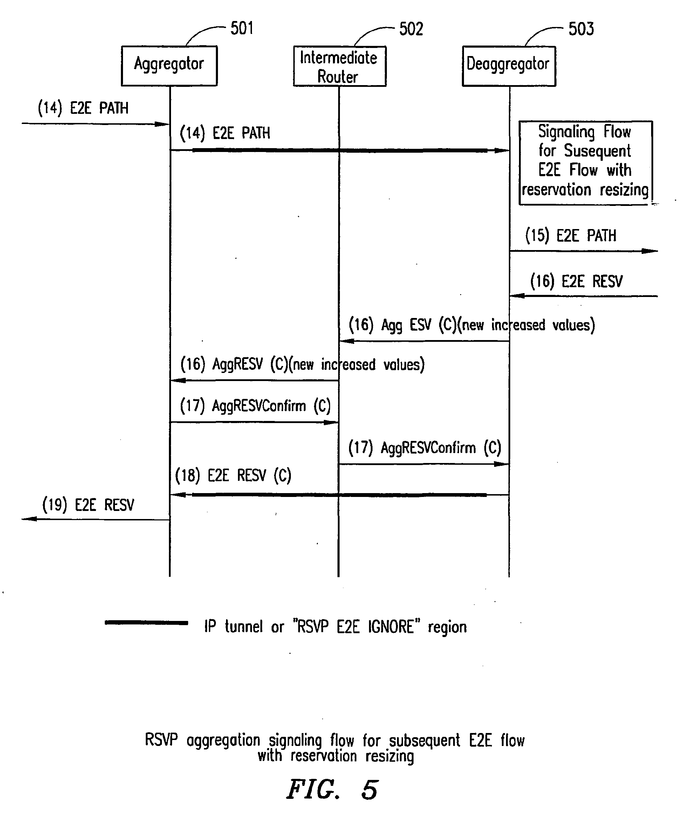

Figure 5 illustrates a detailed flow of RSVP messages in the case when there already exists an Aggregated PATH between the Aggregator 501 and Deaggregator 503 and there is a need for a change in the RSVP aggregated reservation © - represents new values, e.g. more bandwidth). The E2E RSVP messages transport the value that identifies a particular DSCP (e.g., PHB) type in the DCLASS object. Also shown is an intermediate router 502.

SIGNALING FLOW FOR E2E FLOW RELEASE

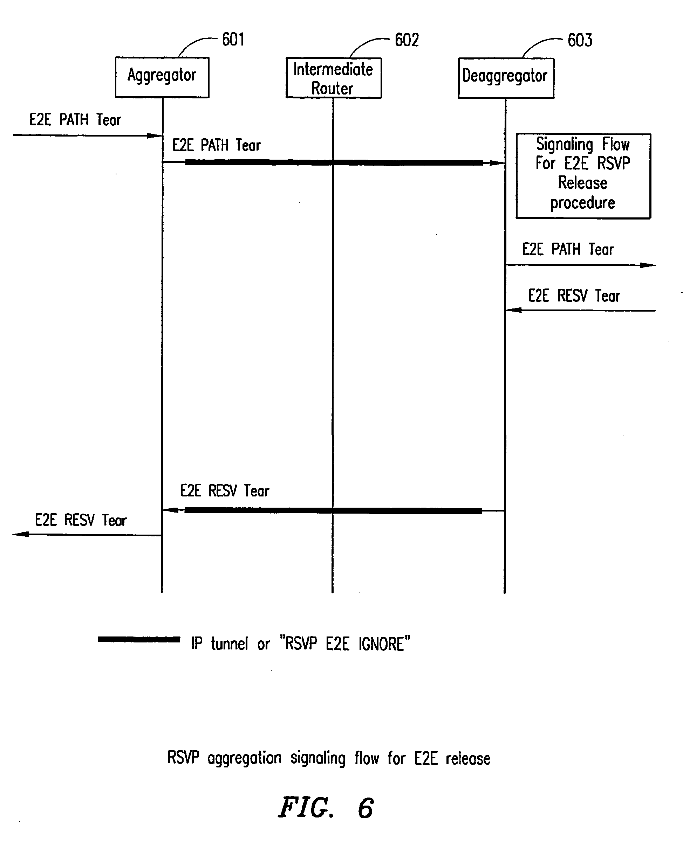

The flow diagram depicted in Figure 6 illustrates an E2E RSVP release procedure. Illustrated in Figure 6 are an Aggregator 601, deaggregator 603 and an intermediate router 602.

**LOAD CONTROL**

Load control is a scheme for resource allocation within the Diffserv networks, without requiring out-band signaling or any per-flow processing in core routers. "Load control scheme" as used herein is to be understood as any available load control protocol or equivalent schemes. A load control scheme is generally designed so as to perform admission control of incoming request and to drop the admitted flows in case of failure events, e.g. link failure. Load Control related information can be stored in the Diffserv packet headers by using either new Differentiated Services Code Points (DSCP) or using the two least significant bits of either the IPv4 TOS (Type of Service) header octet or the Ipv6 Traffic Class header octet. The Load control scheme has two modes of operation, i.e., simple marking, which uses resource probing, and unit-based reservation.

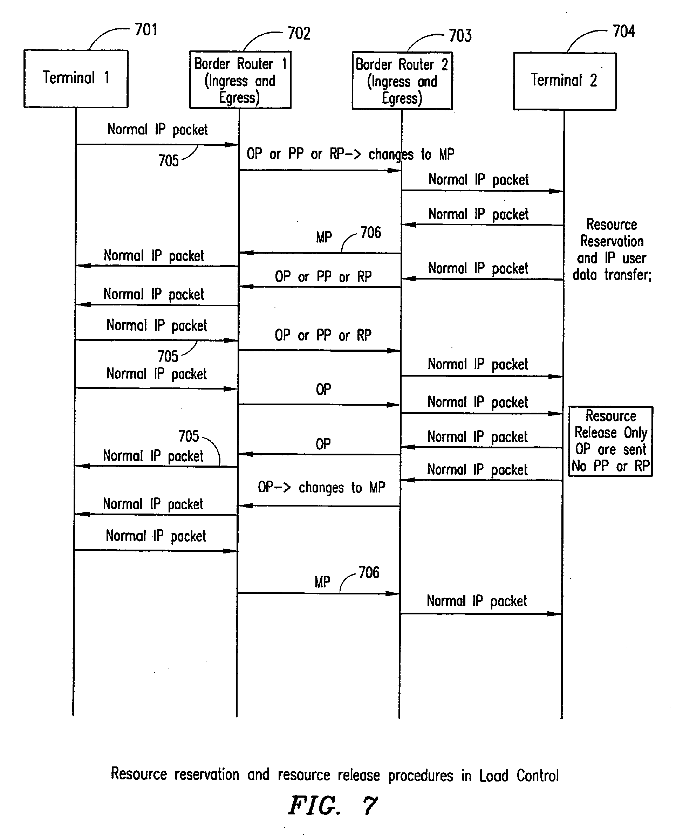

Figure 7 shows a view of the basic operation of the Load control unit based reservation scheme. The resource reservation, during one refreshment period (i.e. period (i)), can be achieved by sending probe packet (PP) or refreshed packet (RP) messages. If a router changes the PP or RP messages into a marked packet (MP), it means that the resource reservation procedure for that unit of resource could not be accomplished. If these messages are not changed into MP messages then it means that the resource reservation procedure has been able to reserve the resources for that unit of resource during period (i+1). The resource release procedure during a period can be achieved when the resource reservation mechanism does not send any PP or RP messages, but only ordinary packet (OP) messages.

Illustrated in Figure 7 are Terminal 1 (701), Terminal 2 (704), Border Router 1 (702) and Border Router 2 (703).

In Figure 7 the Load Control operation is accomplished by providing the possibility to the Ingress/Egress Border Routers 702, 703 to use the Normal IP packets 705 that are sent by the end Terminals 701,704 and to mark them as probe packets (PP), refreshed packets (RP), ordinary packets (OP) or marked packets (MP)packets.

However, there are situations that the Ingress/Egress Border Routers will not receive any Normal IP packets. For these situations it is noted that the Ingress/Egress Border Routers should be able to generate dummy IP packets, i.e., IP packets without a payload. These dummy IP packets will be then used as PP, RP, OP or MP packets.

## DRAWBACKS IN PRIOR ART ARRANGEMENTS

The Internet environment is a highly competitive environment where different IP network operators need to satisfy the customer demands for quality in the supported applications. Finding an efficient solution for end to end QoS over Internet that will satisfy both IP network operators and the demands/needs of their customers is a real challenge. A promising solution to this challenge is the expedient use of the dynamic provisioning of QoS in the IP networks. Dynamic QoS provisioning may be defined as a procedure wherein the QoS provided by a network can be initiated or modified instantaneously either on the demand of an application or based on a predefined procedure described in a service profile.

The IP network operators using dynamic QoS should be satisfied since they will obtain the ability of controlling the utilization of their network instantaneously. Notwithstanding, there may still be some concerns and unsolved issues which are related to the end to end QoS dynamic provisioning in IP networks. The most important issues include:

1.  **Issue _1:**    The end to end QoS demands of end users should be satisfied.
2.  **Issue_2:**    The QoS management architectures used in the core network must be scalable.
3.  **Issue_3 :**    The different QoS management architectures that are combined and used in the end to end communication must easily interoperate.

### KNOWN SOLUTIONS

Currently three main solutions can be used to solve one or more of the three issues listed supra.:

4.  **Solution_1:**    The current Intserv architecture described earlier can provide efficient solutions to the **Issue_ 1** and **Issue_3.**
5.  **Solution_2:**    The current Diffserv architecture described earlier can provide efficient solutions to **Issue_ 3. Issue_1** and **Issue_2** can be partially solved.
6.  **Solution_3:**    The QoS management architecture, called Intserv over Diffserv, can provide efficient solutions to **Issue_1. Issue_2** and **Issue_3** can be partially solved. This QoS management architecture combines the Intserv and

     Diffserv QoS architectures and uses them as complementary technologies in the access and the core networks respectively. The main functionality for the Intserv over Diffserv operation will be performed at the edge devices either at Intserv or Diffserv, i.e., Edge Routers (ER1, ER2) and Border Routers (BR1, BR2), respectively, depending on the specific configurations of the framework. These devices will have the burden of handling both RSVP/Intserv messages and Diffserv packets.

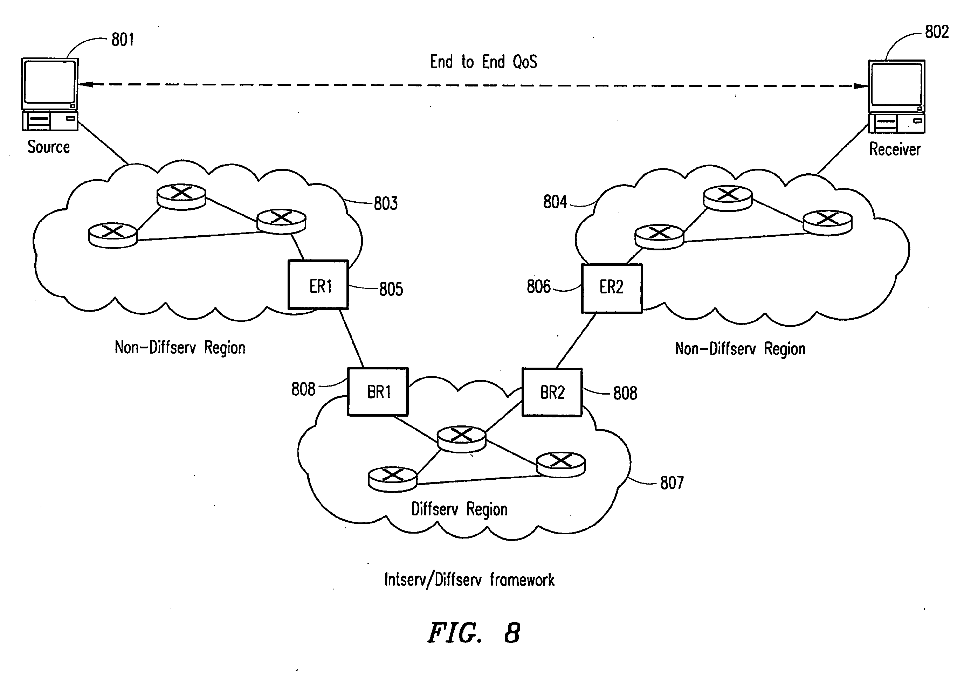

Figure 8 generally illustrates a reference network for the RSVP/Intserv over Diffserv proposed framework. Figure 8 shows a sender 801, a receiver 802, non-Diffserv regions 803, 804, respectively including Edge Routers ER1 (805) and ER2 (806), and a Diffserv region 807 having Border Routers BR1 and BR2 (808). The dynamic QoS management can be accomplished by RSVP aware Border Routers and Core Routers in each Diffserv domain by using per flow, tunneled, aggregated RSVP.

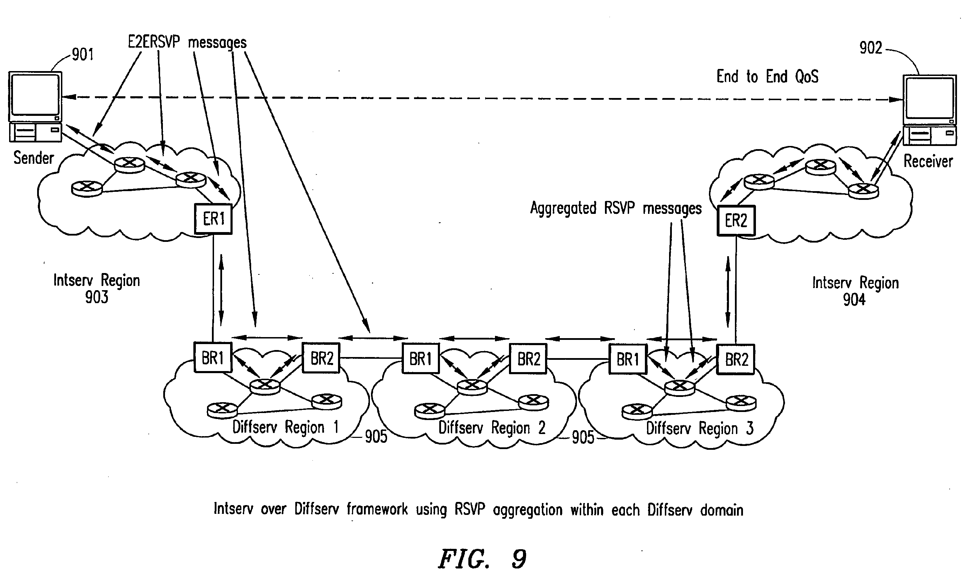

- **Solution_4:** An enhancement of the Intserv over Diffserv framework is proposed wherein the RSVP aggregation protocol described supra is used to reserve aggregated resources on some of the Border Routers and Core routers of each Diffserv domain. This framework is depicted in Figure 9. Figure 9 shows a sender 901, receiver 902, Intserve regions 903,904 and Diffserv regions 905. A Border Router, i.e., BR, can operate as an Aggregator and Deaggregator as described hereinabove. The dynamic QoS management architecture is accomplished by RSVP aggregation aware Border Routers and Core Routers in each Diffserv domain.

However, there are problems and deficiencies with the afore-mentioned solutions.

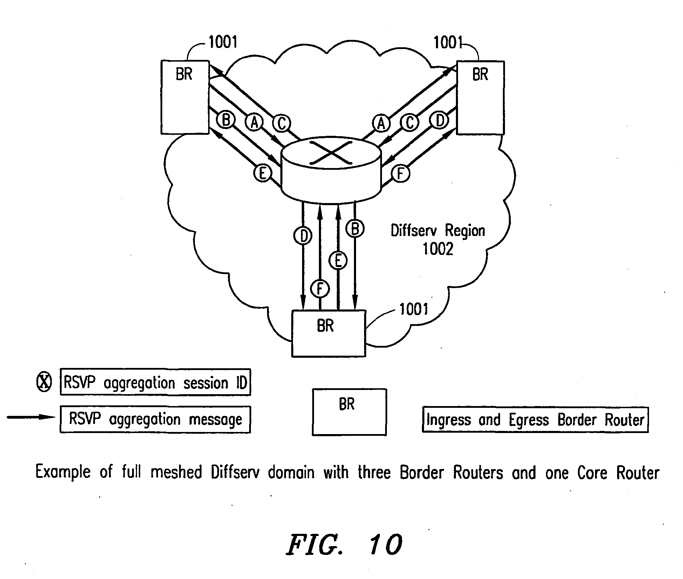

Due to the fact that the resource reservation states stored in all the RSVP aware Border and Core routers are representing aggregated RSVP sessions (i.e., trunks of RSVP sessions), the scalability problems on the routers will be drastically minimized. However, it is believed that in a full meshed Diffserv network, as shown for example in **Figure 10**, the number of the RSVP aggregated sessions grows as: number_aggregates = $n^2$ - n, where $n$ represents the number of Border Routers 1001 that simultaneously send and receive information to/from all the other Border Routers 1001 of the Diffserv domain using the equation:

$$number\_aggregates = n^2 - n.$$

When the number of the Border Routers 1001 is high, e.g., 200. then: *number_aggregates* = 39800. This may cause scalability problems on the Core Routers of the Diffserv domain. Therefore, it can be concluded that **Solution_4** will solve **Iissue_2** only for small Diffserv domains. When the Diffserv domain is large, i.e., including many Border Routers, then **Solution_4** will not be able to solve **Issue_2,**
s **Problems with Issue_3;** In **Solution_4** the dynamic QoS management architecture is accomplished by the RSVP aggregation aware Border Routers and Core Routers in each Diffserv domain. Due to the fact that not all the Border and Core Routers will be RSVP aggregation aware, it will be difficult to interoperate, maintain and manage the end to end QoS provisioning. Therefore, **Solution_4** will not be able to efficiently solve **Issue_3.**

It is seen in light of the above discussions that QoS solutions offered by hitherto known arrangements have setbacks and disadvantages whereby there still exists a need for more efficient provisioning of dynamic on demand end to end QoS in IP networks.

WO 00/30295 already describes dynamic quality of services provision in an IP network having a diffserv domain. In particular WO 00/30295 discloses a diffserv architecture where multicast flows are supported. Bandwidth brokers are distributed within a Diffserv network and a state machine reflects link states associated with corresponding output links of the multicast flows.

By this the teaching of WO 00/30295 allows quality of service provisioning for multicast flows.

However still a need for efficiently providing a dynamic quality of service exists, when the inserv and the diffserv architecture are used in combination.

## BRIEF SUMMARY OF THE INVENTION

The present invention overcomes the disadvantages posed by prior art solutions to providing dynamic QoS.

The invention ensures dynamic end to end QoS in IP networks using a judicious combination of RSVP aggregation, Load Control and Bandwidth brokers used selectively, which can operate on a predetermined protocol.

"Bandwidth" brokers in this invention are connected and made to work differently from bandwidth brokers known in prior art.

This invention enhances and extends the Intserv over Diffserv framework that was used in **Solution_4** and described supra under the subtitle KNOWN SOLUTIONS, such that all the three issues, **Issue_1, Issue_2** and **Issue_3** described earlier under the subtitle "Discussion of Drawbacks" are efficiently addressed and solved.

The invention offers a new framework that is an enhancement and extension of the Intserv over Diffserv framework used in **Solution_4** described earlier. This new framework is able to efficiently solve **Issue_1, Issue_2** and **Issue_3** described earlier under the subtitle "Discussion of Drawbacks."

The following are preferred requirements which the present invention is intended to satisfy:

- **Requirement_1:** The QoS dynamic provisioning in each Diffserv domain must be arranged by a Bandwidth Broker (BB) with a predetermined functionality.

- **Requirement_2:** The IP core network is based on either the Diffserv network architecture or a mix of Diffserv and overprovisioned IP core networks. The second option will be valid especially if the provider of IP networks guarantees certain QoS bounds.

- **Requirement_3:** First of all a new functionality for the Bandwidth Broker (BB) entity used in a Diffserv network is introduced. The BB is currently specified as a centralized oracle that has sufficient knowledge of resource availability and network topology to make admission control decisions. It has been discovered that if the BB is used to obtain the resource availability in the Diffserv domain by directly querying all the Border and Core Routers in the Diffserv domain, this will impose severe scalability problems into the BB. Therefore, a modified way is to be specified that will enable the BB to obtain the required resource availability ofthe resources but will not introduce severe scalability problems into the BB. The modification is related to the fact that the BB is made to directly communicate, by using e.g., Common Open Policy Service or Simple Network Management (COPS or SNMP) protocols, and manage only the Border Routers and not the Core Routers in the Diffserv Domain. In this way the BB is able to request from all the ingress BR's to either reserve a certain amount of resources or refresh a reservation that has been accomplished during a previous refreshment period.

- **Requirement_4:** Each BB must be able to use the RSVP aggregation protocol described supra. Furthermore, each BB must be able to store and manage the RSVP aggregation states.

- **Requirement-5:** The Border Routers must manage the resource availability and the admission control into the interior of the Diffserv domain, i.e., on the Core Routers. This can be achieved by using the Load Control protocol described earlier.

- **Requirement_6:** The Intserv to Diffserv interoperability must be accomplished using one of the following ways:

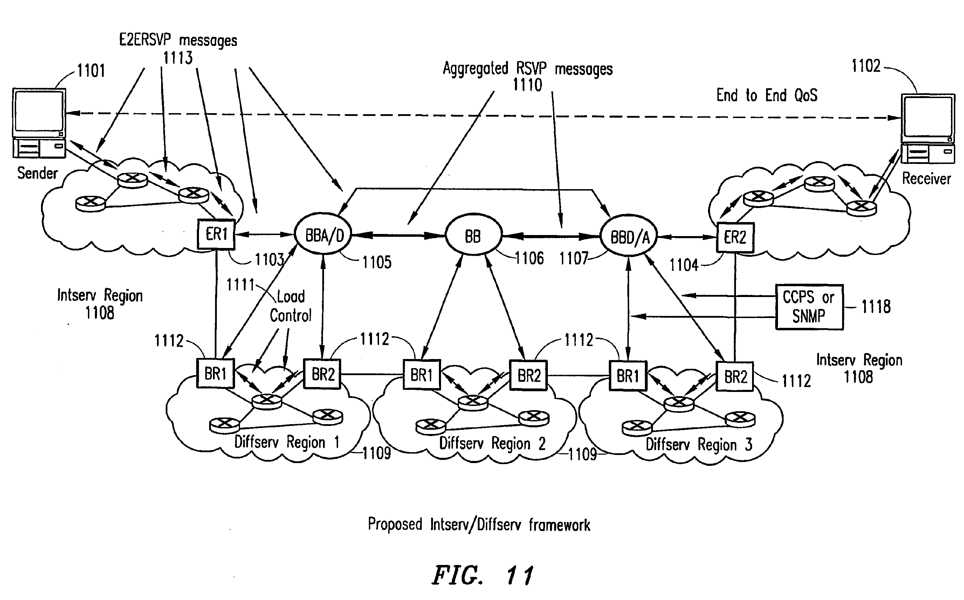

  - by the Edge Router (shown in Figure 11) and either the Bandwidth Broker Aggregator (BBA) or the Bandwidth Broker Deaggregator (BBD). If any Border Router or Core Router is RSVP aware, then IP tunneling may be used to avoid the situation that the applied RSVP messages, i.e., E2E RSVP or aggregated RSVP, will be processed by the Border or Core routers.
  - by the Edge Router, the first Border Router and either the BBA or the BBD. In this situation the first Border Router in a Diffserv domain that can communicate with either a BBA or a BBD and an Edge router must be RSVP aware, then IP tunneling may be used to avoid the situation that the applied RSVP messages, i.e., E2E RSVP or aggregated RSVP, will be processed by these Border or Core routers.

The invention in its broad form resides in a network subsystem for providing dynamic quality of service (QoS) in an IP network which handles IP packets, the network using Resource Reservation Protocol (RSVP) aggregation and differentiated services architecture (Diffserv) including at least one Diffserv domain, said system comprising a bandwidth broker (BB) which manages dynamic provisioning of QoS in each Diffserv domain, using a predetermined protocol, and storing RSVP aggregated states in the bandwidth broker.

In another aspect, the invention resides in a network subsystem for providing dynamically and on demand end to end quality of service in an IP network which uses Resource Reservation Protocol (RSVP) aggregation and differentiated services architecture (Diffserv), said Diffserv comprising at least one Diffserv domain including Border Routers (BRs) and Core Routers (CRs), said network subsystem comprising: a Bandwidth Broker (BB) which stores aggregated states and manages dynamic provisioning of QoS in each Diffserv domain using a predetermined protocol.

The invention also resides in a method of providing dynamic quality of service (QoS) in an IP network which handles IP packets and being of the type which uses RSVP (Resource Reservation Protocol) aggregation and differentiated services architecture (Diffserv), said Diffserv comprising a Diffserv domain including Border Routers (BR) and Core Routers (CR), said method comprising the steps of:

managing dynamic provisioning of QoS in each Diffserv domain by using a bandwidth broker (BB) which communicates using a predetermined protocol.

In a modification, the invention resides in a method, in an IP network of the type which handles IP packets and uses Resource Reservation Protocol (RSVP) aggregation and differentiated services architecture (Diffserv), said Diffserv comprising a Diffserv domain including Border Routers (BR) and Core Routers (CR), said method providing end to end quality of service (QoS) on demand, said method comprising managing dynamic provisioning of QoS in each Diffserv domain by using a bandwidth broker (BB) which communicates using a predetermined protocol.

The predetermined protocol may be for instance what is known as Common Open Policy Service Protocol (COPS) or may be a Simple Network Management Protocol (SNMP).

In a modification of the method of the invention, the step of managing comprises using a BB which obtains resource availability information by communicating only with BRs to the exclusion of CRs.

Yet another modification of the inventive method, includes the step of reserving resources through a BB which queries BRs.

A further modification of the inventive method includes the step of refreshing a reservation of resources, which reservation has been accomplished during a previous refreshment period.

In a variation of the inventive method, the BB is capable of using an RSVP aggregation protocol and is able to store and manage RSVP aggregation states.

A further variation of the inventive method includes the step of using Load Control Protocol, and managing, by use of a BR, resource availability and admission control into an interior of said Diffserv domain.

In a modification of the inventive network subsystem the Diffserv domain includes Border Routers (BRs) and Core Routers (CRs), and the BB obtains resource availability information by communicating with BRs.

In yet another modification, the BB reserves resources by querying BRs to the exclusion of CRs; alternatively, the BB refreshes an already made reservation of resources which reservation has been accomplished during a previous refreshment period.

In a variation of the inventive network subsystem, the BB is capable of using an RSVP aggregation protocol and is able to store and manage RSVP aggregation states.

In yet another variation, load control protocol is used, and, by the use of a BR, resource availability and admission control into an interior of a Diffserv domain are managed.

## BRIEF DESCRIPTION OF THE DRAWINGS

A more detailed understanding of the invention may be had from the following description of preferred embodiments, given by way of example and to be understood in conjunction with the accompanying drawing, wherein:

FIGURE 1 illustrates a simplified RSVP/Intserv framework;
FIGURE 2 illustrates a simplified Diffserv framework;
FIGURE 3 illustrates a detailed flow of E2E RSVP messages;
FIGURE 4 illustrates RSVP aggregation flow for subsequent E2E flow without Reservation resizing;
FIGURE 5 illustrates RSVP aggregation signaling for subsequent E2E flow with reservation resizing;
FIGURE 6 illustrates an E2E RSVP release procedure;
FIGURE 7 illustrates resource reservation and resource release procedures in load control;
FIGURE 8 illustrates the reference network for the RSVP/Intserv over a Diffserv framework;
FIGURE 9 illustrates Intserv over Diffserv framework using RSVP aggregation within each Diffserv domain;
FIGURE 10 shows an example of a full meshed Diffserv domain with three border routers (BR) and one core router (CR);
FIGURE 11 illustrates a proposed inventive subsystem of the network using an Intserv/Diffserv framework and a bandwidth broker;
FIGURE 12 illustrates a proposed inventive subsystem of the network using Intserv/Diffserv operation when RSVP aggregated states are not available in the BBs;
FIGURE 13 illustrates a proposed inventive subsystem of the network using Intserv/Diffserv operation when RSVP aggregated states are available in the BBs, and no resizing is needed;
FIGURE 14 illustrates a modification of the arrangement in Figure 13 where resizing is needed; and
FIGURE 15 shows an example of refreshment of reserved resources.

## DETAILED DESCRIPTION OF THE INVENTION

Described hereinafter are an exemplary method and network subsystem which use a combination of bandwidth brokers, RSVP aggregation and load control protocols, to achieve a dynamic end to end QoS.

## Operation

The QoS dynamic provisioning mechanism in a Diffserv domain can use a resource reservation protocol that will be able to inter-communicate with the QoS mechanisms applied in neighboring domains (Diffserv or non-Diffserv). Such a protocol can be the RSVP aggregation protocol described earlier but preferably with a modification. The modification can consist, for example, in that the Border Routers (BR) will not anymore store the RSVP aggregated states, but these states will be stored in the Bandwidth Brokers (see **Requirement_4**).

Figure 11 generally illustrates a preferred embodiment of the invention showing sender 1101 and receiver 1102 between which end to end QoS is intended to be achieved. As shown, Edge Router ER1 shown at 1103 interacts with sender 1101, and Edge Router ER2 shown at 1102 interacts with receiver 1102. Also shown in Figure 11 are Intserv regions 1108, and Diftserv regions 1109 interacting with Bandwidth Broker Aggregator BBA/D, shown at 1105, Bandwidth Broker BB shown at 1106, and Bandwidth Broker Aggregator BBD/A shown at 1107. Aggregated RSVP messages 1110 flow between 1105,1106, and 1106, 1107.

As shown Figure 11 the network element 1105 (BBA) is functioning as a Bandwidth Broker Aggregator and the nework element 1104 (BBD) is functioning as a Bandwidth Broker Deaggregator.

Furthermore, the E2E RSVP and RSVP aggregation messages in Figure 11 are exchanged between the Intserv networks and the BB's that are managing each Diffserv domain and are used to provide the QoS end to end provisioning. The Intserv to Diffserv interoperability (see **Requirement 6**) can be accomplished either directly via the Edge Routers 1103, 1104 (shown in Figure 11) and the BBA/BBD elements 1105, 1107, or, via the Edge Router ER1, the first Border Router BR1, and BBA/BBD elements 1105, 1107.

The management of the resources in the interior of each Diffserv domain, i.e., Core Routers is accomplished by each BR (see **Requirement_5**). This can be achieved by using a protocol such as Load Control (shown at 1111 in figure 11) described earlier.

Each BB (1105, 1106, 1107, communicates with all the ingress BR's (1112) of its Diffserv domain by using protocols 1118 e.g., Common Open Policy Service (COPS) or Simple Network Management Protocol (SNMP). In this way the BB is able to request from all the ingress BR's to either reserve a certain amount of resources or refresh a reservation that has been accomplished during a previous refreshment period.

Each ingress BR (1112) will use Load Control (1111) to reserve the resources requested by the BB. Afterwards, each BR will have to inform the BB about the amount of the resources that are actually reserved by the Load Control protocol. Each BB must contain a reservation state that will store the total amount of resources that were reserved by the Load Control protocol. This reservation state is only updated if either the BBA (1105) is requesting to modify it or if the resource conditions in the Diffserv network, i.e., Core routers, suddenly change.

As already explained earlier, the operation ofthe Load Control (1111) protocol is based on refreshment periods. If a certain amount of resources are reserved during a refreshment period, say period(i), then these resources will be used by the Diffserv domain during period(i+1). If these resources also have to be used during period (i+2), then these reservations have to be refreshed during period (i+1). It is proposed herein that each BB in combination with the BRs will manage the refreshment procedure in its Diffserv domain. During each period the BB will use its reservation state information to find out how many units of resources, per RSVP aggregated session, will have to be refreshed during the next refreshment period.

In the proposed Intserv/Diffserv framework, three operation states are distinguished:

- Resource Reservation state: using among others the resource reservation state of the Load Control protocol the aggregated resources are reserved in all the BB's that are used in the end to end communication.
- Resource refreshment state: all the reserved resources in each Diffserv domain that have to remain reserved during the next refreshment period, have to be refreshed.
- Resource release state: all the reserved resources in each Diffserv domain that have to be released during the next refreshment period, will not be refreshed.

### Resource reservation state

The operation of the RSVP aggregation protocol in the proposed Intserv/Diffserv framework during the Resource Reservation state depends among others on the availability of the RSVP aggregation states in the BB's. There are three situations that can be identified:

- Scenario_1: the BB's do not contain any RSVP aggregated state. Therefore, a scenario similar to the one explained in Figure 3 has to be used in order to create these RSVP aggregated states.
- Scenario_2: the BB's contain RSVP aggregated states and the new E2E RSVP request 1113 does not require the resizing ofthe RSVP aggregated states 1110. Therefore, a scenario similar to the one explained in Figure 4 has to be used.
- Scenario_3: the BB's contain RSVP aggregated states and the new E2E RSVP request 1113 requires the resizing of the RSVP aggregated states. Therefore, a scenario similar to the one explained in Figure 5 has to be used.

### Scenario 1 (without aggregated states)

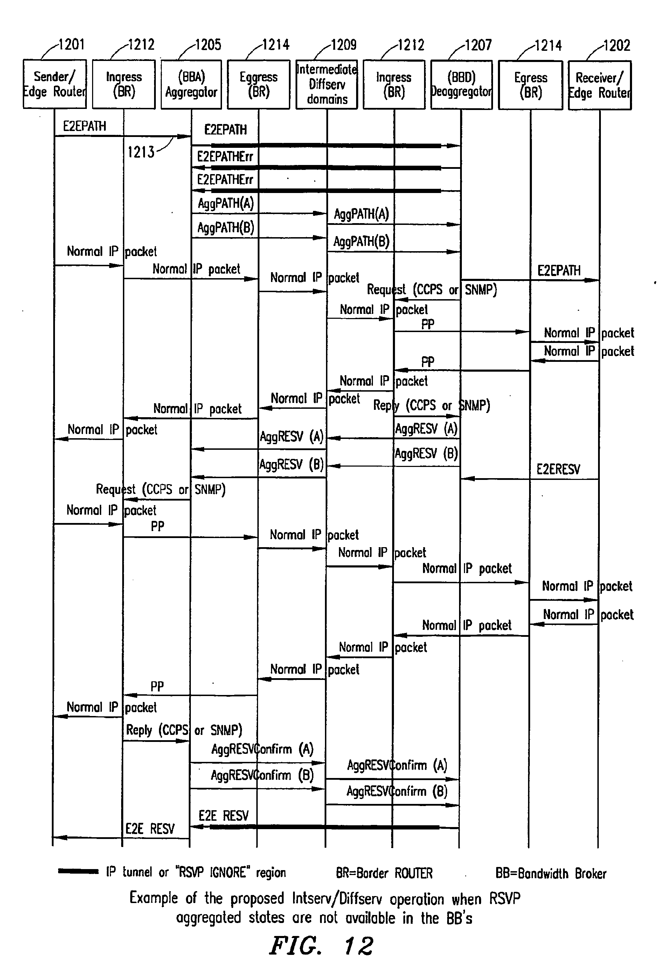

Figure 12 shows an exemplary Intserv/Diffserv operation, when RSVP aggregated states are not available in the Bandwidth Brokers (BBs). Figure 12 illustrates sender/edge router 1201, receiver/edge router 1202, ingress border routers 1212, eggress border routers 1214 and intermediate Diffserv domains 1209.

If the scenario 1 is applied to the network shown in figure 11, it is assumed that the RSVP aggregated states 1110 are not available in the BB's 1105,1106,1107 at the moment that a RSVP E2E message 1113 arrives at the BBA. The operation of the proposed Intserv/Diffserv for this scenario is based on the RSVP aggregation operation viewed earlier in Figure 3, and it can be summarized as follows:

- Step_1: The Sender sends an RSVP E2E PATH message to the BBA. Note that this can be accomplished either directly via an Edge Router (shown in Figure 11) or via the Edge Router and the first Border Router that can communicate with a BBA and an Edge router.
- Step_2: The BBA 1205 receives the RSVP E2E PATH message 1213 and by using the IP tunneling encapsulation procedure or by using the new proposed in RSVP IGNORE option in [Balt00], it sends the RSVP E2E PATH message to the BBD 1207.
- Step_3: The BBD receives the RSVP E2E PATH message. The BBD depending on the number of the supported PHB's, sends one or more E2E PathErr messages to the BBA. In this example due to the fact that the BB's have to create two RSVP Aggregated states, one for an EF PHB and the other for an AF PHB, two such messages are sent.
- Step__4: The BBA after receiving these two E2E PATHErr messages, creates two RSVP aggregated states, one for each PHB. The BBA sends two RSVP AggPATH messages (A and B) to the neighboring BB. It is to be noted that in Figure 12, this BB is contained in the "Intermediate Diffserv domains" block. Note that the RSVP AggPATH messages have to be sent through all the intermediate Diffserv domains, i.e., the BB's, that are providing the end to end communication.
- Step_5: The BBD receives these two AggPATH messages and sends the RSVP E2E message (after decapsulating it and adjusting its QoS specifications) to the Receiver 1202 (via an Edge Router).
- Step_6: The BBD by using SNMP or COPS will request from each ingress BR in its Diffserv domain to reserve the resources that were demanded by the RSVP AggPATH messages. Each BR will have to reserve a certain predefined percentage of the total amount of the resources that must be reserved.
- Step_7: Each ingress BR will use the Load Control mechanisms explained earlier to reserve the requested resources.
- Step_8: Each BR will send a Reply message to the BBD to inform the BBD about the status of this procedure. Note that the Reply message could be a SNMP or a COPS message.
- Step_9: The BBD using the obtained information from all the BR's, creates the aggregated reservation state and it sends two AggRESV messages to the neighboring BB. In Figure 12 this BB is contained in the "Intermediate Diffserv domains" block. Note that the RSVP AggRESV messages have to be sent through all the intermediate Diffserv domains, i.e., the BB's, that are providing the end to end communication.
- Step_10: In each intermediate Diffserv domain (i.e., BB and BRs) and also in the initiating Diffserv domain (i.e., BBA and BRs) the functionality described in Step_6, Step_7, Step_8, and Step_9 has to be repeated. The difference is that in Step_6 the SNMP or COPS messages will request the resources that were demanded by the received RSVP AggRESV messages and not by the AggPATH messages.
- Step_11: The BBA sends via all the intermediate BB's two RSVP AggRESVConfirm messages to the BBD. The messages confirm the reservation of the resources.
- Steep_12: The Receiver (via an Edge Router) replies with a RSVP E2E RESV message that among others contains the QoS parameters (specs) that can be supported by the Receiver.
- Step_13: The BBD encapsulates the RSVP E2E Resv message (using IP tunneling or the RSVP IGNORE option) that has been received from the Receiver (see Step_12) and sends it to the BBA.
- Step_14: The BBA decapsulates it and sends it to the Sender (via an Edge Router).

**Scenario 2 (with aggregated states but without a need for resizing)**

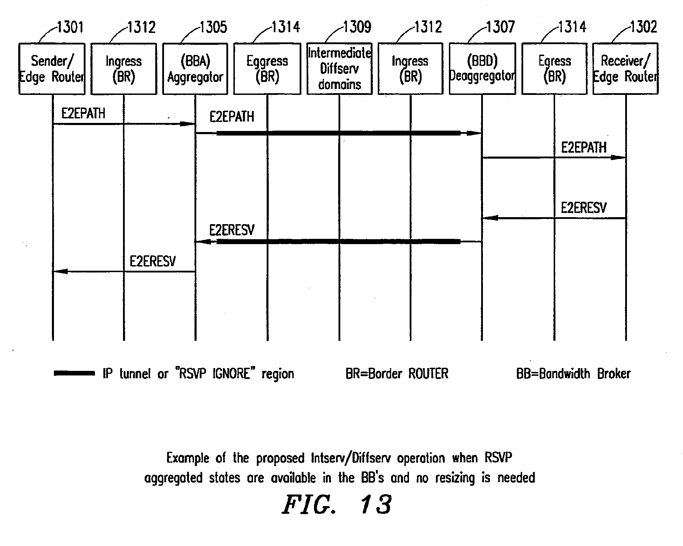

Figure 13 illustrates an exemplary proposed Intserv/Diffserv operation when RSVP aggregated states are available in the BBs, and no resizing is needed. Shown in figure 13 are sender/edge router 1301, receiver/edge router 1302, intermediate diffserv domains 1309, ingress BRs 1312, aggress BRs 1314, BB Aggregator 1305 and BB deaggregator 1307.

In this Scenario as shown in Figure 13, it is considered that the RSVP aggregated states are available in the BB's at the moment that a RSVP E2E message arrives at the BBA. Furthermore, it is noted that the new E2E RSVP request does not require the resizing of the RSVP aggregated states. The operation of the proposed Intserv/Diffserv for this scenario is based on the RSVP aggregation operation illustrated in Figure 4 and it can be summarized as follows:

- Step_1: The Sender sends an RSVP E2E PATH message to the BBA. Note that this can be accomplished either directly via an Edge Router (shown in Figure 11) or via the Edge Router and the first Border Router that can communicate with a BBA and an Edge router.
- Step_2: The BBA receives the RSVP E2E PATH message and by using the IP tunneling encapsulation procedure, it sends the RSVP E2E PATH message to the BBD.

- Step_3: The BBD decapsulates the RSVP E2E PATH message and it sends it to the Receiver (via an Edge Router).
- Steep_4: The Receiver replies (via an Edge Router) with a RSVP E2E RESV message that among others contains the QoS parameters that can be supported by the Receiver.
- Step_5: The BBD encapsulates the RSVP E2E Resv message (using IP tunneling or the RSVP IGNORE option) that has been received from the Receiver and sends it to the BBA.
- Steep_6: The BBA decapsulates it and sends it to the Sender (via an Edge Router).

**Scenario 3 (with aggregate states but with a need for residing**

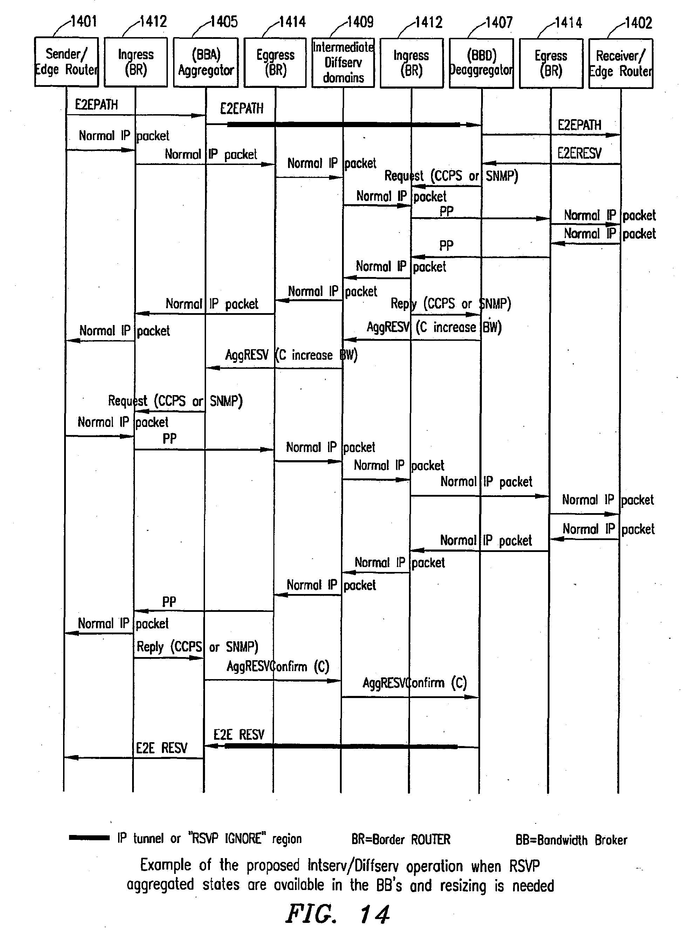

In the Scenario shown in Figure 14, it is considered that the RSVP aggregated states are already available in the BB's and that the E2E RSVP request requires the resizing of these states. The operation of the proposed Intserv/ Diffserv framework for this scenario is based on the operation viewed in Figure 5 and can be summarized as follows:

- Step_1: The Sender 1401 sends an RSVP E2E PATH message to the BBA 1405. Note that this can be accomplished either directly via an Edge Router (shown in Figure 11) or via the Edge Router and the first Border Router that can communicate with a BBA and an Edge router.
  Figure 14 illustrates an example of a proposed Intserv/Diffserv operation when RSVP aggregated states are available in the BBs, and resizing is needed. Shown in figure 14 are sender/edge router 1501, receiver/edge router 1402, ingress BRs 1412, eggress BRs 1414, intermediate Diffserv domains 1409, BB Aggregator 1405 and BB Deaggregator 1407.
- Step_2: The BBA receives the RSVP E2E PATH message and by using the IP tunneling encapsulation procedure or by using the new proposed RSVP E2E IGNORE option in [Balt00], it sends the RSVP E2E PATH message to the BBD 1407.
- Step_3: The BBD decapsulates the RSVP E2E PATH message and it sends it to the Receiver 1402 (via an Edge Router).
- Step_4: The Receiver 1402 (via an Edge Router) replies with a RSVP E2E RESV message that among others contains the QoS parameters that can be supported by the Receiver.
- Step_5: The BBD 1407, in this example, will find out that the RSVP aggregated states are not enough to support the requested QoS parameters that are contained in the RSVP E2E RESV message. Therefore, the BBD 1407. will initiate a RSVP aggregated reservation resizing procedure.
- Step_6: The BBD 1407 by using SNMP or COPS will request from each ingress BR in its Diffserv domain to reserve the resources that were demanded by the RSVP E2E RESV message. Each BR will have to reserve a certain predefined percentage of the total amount of the resources that must be resized.
- Step_7: Each ingress BR will use the Load Control mechanism (described earlier), to resize the requested resources.
- Step_8: Each BR will send a Reply message to the BBD to inform it about the status of this procedure. Note that the Reply message could be a SNMP or a COPS message.
- Steep_9: The BBD using the obtained information from all the BR's, resizes the aggregated reservation state and it sends one AggRESV message to the neighboring BB. In Figure 14 this BB is contained in the "Intermediate Diffserv domains" block. Note that the RSVP AggRESV message has to be sent through all the intermediate Diffserv domains, i.e., the BB's, that are providing the end to end communication.
- Step_10: In each of the intermediate Diffserv domains (i.e., BB and BRs) and in the initiating Diffserv domain (i.e., BBA and BRs) the functionality described in Step_6, Step_7, Step_8 and Step_9 has to be repeated.
- Step_11: The BBA sends via all the intermediate BB's one RSVP AggRESVConfirm message to the BBD. This message confirms the resizing of the reserved resources.
- Step_12: The BBD encapsulates the RSVP E2E Resv message (using IP tunneling or the RSVP IGNORE option) that has been received from the Receiver (see Steep_4) and sends it to the BBA.
- Step_13: The BBA decapsulates it and sends it to the Sender (via an Edge Router).

**Resource refreshment state**

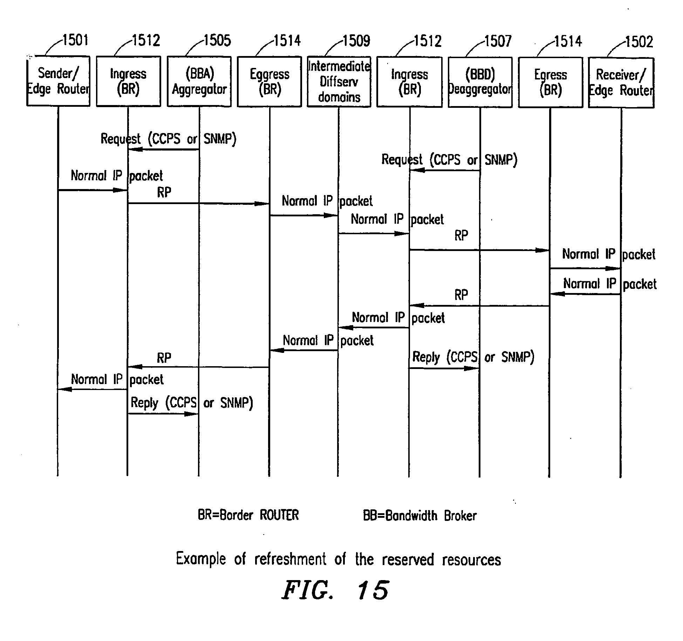

Due to the fact that the proposed Intserv/Diffserv framework is using the Load Control protocol to reserve the Aggregated resources within each Diffserv domain, it has also to refresh these resources during each refreshment period.
It is noted that the refreshment procedure in each Diffserv domain should be managed by the BB that is managing the QoS in the Diffserv domain in combination with its ingress BR's. In each refreshment period and for each RSVP aggregation state the BB in each Diffserv domain will have to inform each BR about the number of the resources that have to be refreshed. Using the Load Control protocol each BR will then refresh the reservation of the resources reserved. This operation is described earlier and it can be achieved by sending for each unit of resource one RP packet. This operation is generally illustrated in Figure 15, which is an example of refreshment of the reserved resources, and shows sender/edge router 1501, receiver/edge router 1502, ingress BRs 1512, eggress BRs 1514, intermediate Diffserv domains 1509, BB Aggregator 1505 and BB Deaggregator 1507.

### Resource release state

As explained earlier, the E2E RSVP reservation states are temporary states, i.e., soft states, that have to be updated temporarily. This means that E2E PATH and E2E RESV messages will have to be periodically retransmitted. If the states are not refreshed then they will be removed. These states may also be removed by using the E2E PATHTear and E2E RESVTear messages. The refreshment, update and release of the aggregated states is based on a certain predefined policy which the Aggregator and Deaggregator will decide when the RSVP Aggregated states will be refreshed or updated; this triggering time is not completely defined by the E2E RSVP messages. In particular, this predefined policy takes into account the sum of the underlying E2E reservations, and a certain level of trend analysis.
Within each Diffserv domain the release of the resources is managed by each BR and is accomplished by using the Load Control protocol. If the BR does not receive any request for change in its reserved resources from the BB, then it will assume that it will have to release all the resources that it is managing. The BR will release a previously reserved resource by not refreshing it.

### ADVANTAGES OF THE INVENTION

This invention offers a novel concept and method that can be used to combine an Intserv region(s) with a dynamically provisioned Diffserv domain, where the QoS management is controlled by a new type of Bandwidth Brokers. This approach enhances and extends the Intserv over Diffserv framework, i.e., Solution_4 described supra. The advantages of this new concept compared to the one described as Solution_4 given earlier are:

- The BB is able to directly communicate and manage only the Border Routers and not the Core Routers in the Diffserv Domain. The Border Routers will manage the resource availability and the admission control into the interior of the Diffserv domain, i.e., on the Core Routers. This can be achieved by using the Load Control protocol specified earlier. In this way the dynamic QoS provisioning in Diffserv architectures does not impose severe scalability problems on the BB and on the Core Routers of the Diffserv domain. Furthermore, due to the fact that the RSVP aggregated states are now only stored into the BB, the problem related to large full meshed networks will not anymore occur. In other words **Issue_2** described earlier can be efficiently solved.
- The interoperation between the BB's of each Diffserv domain can be accomplished quite efficiently and easily. Therefore, Issue_3 described above is efficiently solved.

It is important to note that the combination of the RSVP aggregation and the Load Control concepts can be also used when RSVP is not applied end to end. In this case the Aggregator can use a policy that can be based on local configurations and local QoS management architectures, to set the DSCP packets that are passing into the aggregated region. This means that this concept can also be applied on e.g., PSTN (Public Switched Telephone Networks), GPRS (General Packet Radio Service) or UMTS (Universal Mobile Telecommunications System) networks that are using the Diffserv concepts in their Core networks.

### EQUIVALENTS

Although preferred embodiments of the method and apparatus of the present invention have been illustrated in the accompanying drawings and described in the foregoing detailed description, it will be understood that the invention is not limited to the embodiments disclosed, but includes numerous rearrangements, modifications, equivalents and substitutions without departing from the scope of the invention as set forth in the appended claims.

### List of References:

[BeBi99] Bernet, Y., Binder, J., Blake, S., Carlson, M., Davies, E., Ohlman, B., Werma, D., Wang, Zh., Weiss, W., "A Framework for Differentiated Services", draftietf-diffserv-framework-02.txt, February 1999.

[RFC2998] Bernet, Y., Yavatkar, R., Ford, P., Baker, F.,Zhang, L., Speer, M., Braden, R., Davie,B., felstaine, E. "Framework for Integrated Services operation over Diffserv Networks",draft-ietf-issll-diffserv-rsvp-04.txt, March 2000 (work in progress).

[DuYa99] Durham, D., Yavatkar, R., "Inside the Internet's Resource reSerVation Protocol: Foundations for Quality of Service", John Willey & Sons, Inc., 1999.

[RFC1633] Braden, R., Clark, D., Shenker, S., "Integrated Services in the Internet Architecture: An Overview", IETF RFC1633, 1994.

[RFC1905] Case, J., McCloghrie, K., Rose, M., and S. Waldbusser, "Protocol Operations for Version 2 of the Simple Network Managment Protocol (SYMPv2)", RFC 1905, 1996.

[RFCC2205] Braden, R., Zhang, L., Berson, S., Herzog, S., Jamin, S., "Resource Reservation Protocol (RSVP) Version 1 Functional Specification", IETF RFC 2205, 1997.

[RFC2210] Wroclawski, J., "The use of RSVP with IETF integrated Services", IETF RFC 2210, 1997.

[RFC2475] Blake, S., Black, D., Carlson, M., Davies, E., Wang, Zh., Weiss, W., "An architecture for Differentiated Services", IETF RFC 2475, 1998.

[RFC2597] Heinanen, J., Baker, F., Weiss, W., Wroclawski, J., "Assured Forwarding PHB group", IETF RFC 2597, 1999.

[RFC2598] Jacobson, V., Nichols, K., Poduri, K., "An Expedited Forwarding PHB", IETF RFC 2598, 1999.

[RFC2638] Nichols, K., Jacobson, V., Zang, L., "A two-bit Differentiated Services Architecture for the Internet", IETF RFC 2638, 1999.

[RFC2748] Durham, D., Boyle, J., Cohen, R., Herzog, S., Raja, R., Sastry, A., "The COPS (Common Open Policy Service) Protocol", IETF RFC, January 2000.

**Claims**

1. A method of providing dynamic quality of service in an IP (Internet Protocol) network which handles IP packets and being of the type which uses RSVP (Resource Reservation Protocol) aggregation and includes a region using an Intserv (Integrated Services) architecture (1108) connected to a region using a Diffserv (Differentiated Services) architecture (1109), said Intserv region (1108) including an Edge Router (1103; 1104) and said Diffserv region (1109) including a border router (1112) and a core router, said method comprising the steps of:

   interfacing a bandwidth broker (1105; 1106; 1107) with the edge router (1103; 1104) in the Intserv region (1108) and the border router (1112) in the Diffserv region (1109), said bandwidth broker communicating directly with the border router (1112) without communicating with the core router in the Diffserv region (1109), and
   storing and managing RSVP aggregation states in the bandwidth broker using the RSVP aggregation protocol.

2. A method as in claim 1 wherein the step of managing comprises using a bandwidth broker which obtains resource availability information by communicating only with border routers (1112) said bandwidth broker (1105; 1106; 1107) also having an aggregator and deaggregator functionality.

3. A method as in claim 2, including the step of using a plurality of types of bandwidth brokers (1105; 1106; 1107) and causing the bandwidth brokers (1105; 1106; 1107) to interact by using RSVP aggregation.

4. A method as in claim 2, including the step of refreshing a reservation of resources, which reservation has been accomplished during a previous refreshment period, and including the step of not refreshing reserved resources in each Diffserv domain which resources have to be released in a next refreshment period.

5. A method as in claim 1 in which said bandwidth broker (1105; 1106; 1107) is capable of using an RSVP aggregation protocol, the method including the step of managing stored RSVP aggregation states, and selectively resizing an RSVP aggregated state pursuant to a new end to end RSVP request.

6. A method as in claim 1 including the step of using Load Control Protocol, and managing, by use of a border router (1112), resource availability and admission control towards said Diffserv domain.

7. A method in claim 4 including the step of using a bandwidth broker (1105; 1106; 1107) in combination with border routers (1112) managing the step of refreshing reservation of resources.

8. A method as in claim 6 wherein the border routers (1112) contain a reservation state which stores a total amount of resources which were reserved by the Load Control Protocol.

9. A method as in claim 8 wherein a bandwidth broker (1105; 1106; 1107) comprises a bandwidth broker aggregator and including updating the reservation state if the bandwidth broker aggregator is requesting modification or if resource conditions in the Diffserv network including core routers, suddenly change.

10. A method as in claim 1, wherein the step of managing comprises: using a bandwidth broker, which obtains resource availability information by communicating with the border routers.

11. A method as in claim 10, including the step of using a plurality of types of bandwidth brokers (1105; 1106; 1107) and causing bandwidth brokers (1105; 1106; 1107) to interact by using RSVP aggregation.

12. A method as in claim 10, including the step of refreshing a reservation of resources, which reservation has been accomplished during a previous refreshment period.

13. A network subsystem for providing dynamic quality of service in an IP (Internet Protocol) network that uses RSVP (Resource Reservation Protocol) aggregation and includes a region using Intserv (Integrated Services) architecture connected to a region using a Diffserv (differentiated services) architecture (1109), said network subsystem comprising:

an edge router (1103; 1104) in the Intserv region (1108),
a border router (1112) and a core router in the Diffserv region (1109), and
a bandwidth broker (1105; 1106; 1107) that interfaces the edge router (1103; 1104) in the Intserv region (1108) with the border router (1112) in the Diffserv region (1109), said bandwidth broker (1105; 1106; 1107) communicating directly with the border router (1112) without communicating with the core router in the Diffserv region (1109) and said bandwidth broker (1105; 1106; 1107) comprising: means for storing and managing RSVP aggregation states using the RSVP aggregation protocol.

14. A network subsystem as in claim 13 wherein the Diffserv domain includes border routers and Core Routers, and wherein the bandwidth broker (1105; 1106; 1107) obtains resource availability information by communicating with border routers.

15. A network subsystem as in claim 14, comprising a plurality of bandwidth brokers (1105; 1106; 1107) including Bandwidth Broker Aggregators and Bandwidth Broker Deaggregators controlling RSVP aggregation.

16. A network subsystem as in claim 14 wherein the bandwidth broker (1105; 1106; 1107) refreshes an already made reservation of resources which reservation has been accomplished during a previous refreshment period.

17. A network subsystem as in claim 13, wherein a border router (1112) is capable of using Load Control protocol, and wherein a border router (1112) enables managing resource availability and admission control towards said Diffserv domain.

18. A bandwidth broker (1105; 1106; 1107) for providing dynamic quality of service in an IP (Internet Protocol) network that uses RSVP (Resource Reservation Protocol) aggregation and includes a region using an Intserv (Integrated Services) architecture (1108) connected to a region using a Diffserv (Differentiated Services) architecture (1109), said Intserv region (1108) including an edge router (1103; 1104) and said Diffserv region (1109) including a border router (1112) and a core router, said bandwidth broker (1105; 1106; 1107) comprising:

means for interfacing with the edge router (1103; 1104) in the Intserv region(1108) and with the border router (1112) in the Diffserv region, said bandwidth broker (1105; 1106; 1107) communicating directly with the border router (1112) without communicating with the core router in the Diffserv region (1109) and
means for storing and managing RSVP aggregation states using the RSVP aggregation protocol.

**19.** A bandwidth broker as in claim 18, wherein the Diffserv domain includes border routers and Core Routers, and wherein the bandwidth broker (1105; 1106; 1107) obtains resource availability information by communicating with border routers.

**20.** A bandwidth broker as in claim 19, configured as a Bandwidth Broker Aggregator or a Bandwidth Broker Deaggregator controlling RSVP aggregation.

**21.** A bandwidth broker as in claim 19 wherein the bandwidth broker (1105; 1106; 1107) refreshes an already made reservation of resources which reservation has been accomplished during a previous refreshment period.

**Patentansprüche**

**1.** Verfahren zum Bereitstellen von dynamischer Dienstgüte in einem IP- (Internet Protocol) Netzwerk, welches IP-Pakete handhabt und von dem Typ ist, welcher RSVP-(Resource Reservation Protocol) Aggregation verwendet und eine Region enthält, die eine IntServ- (Integrated Services) Architektur (Architektur der integrierten Dienste) (1108) verwendet und mit einer Region verbunden ist, die eine DiffServ- (Differentiated Services) Architektur (Architektur der differenzierten Dienste) (1109) verwendet, wobei die IntServ-Region (1108) einen Edge-Router (1103; 1104) enthält und die DiffServ-Region (1109) einen Border-Router (1112) und einen Core-Router enthält, wobei das Verfahren die folgenden Schritte umfasst:

Koppeln eines Bandbreitenbrokers (1105; 1106; 1107) mit dem Edge-Router (1103; 1104) in der IntServ-Region (1108) und dem Horder--Router (1112) in der DiffServ-Region (1109), wobei der Bandbreitenbroker direkt mit dem Border-Router (1112) kommuniziert, ohne mit dem Core-Router in der DiffServ-Region (1109) zu kommunizieren, und
Speichern und Verwalten von RSVP-Aggregations-Zuständen in dem Bandbreitenbroker unter Verwendung des RSVP-Aggregations-Protokolls.

**2.** Verfahren nach Anspruch 1, wobei der Schritt des verwaltens das Verwenden eines Bandbreitenbrokers umfasst, welcher Ressourcenverfügbarkeits-Informationen durch Kommunizieren nur mit Border-Routern (1112) gewinnt, wobei der Bandbreitenbroker (1105; 1106; 1107) außerdem eine Aggregator- und Deaggregator-Funktionalität aufweist.

**3.** Verfahren nach Anspruch 2, welches den Schritt des Verwendens mehrerer Typen von Bandbreitenbrokern (1105; 1106; 1107) und Veranlassens der Bandbreitenbroker (1105; 1106; 1107), unter Verwendung von RSVP-Aggregation zu interagieren, enthält.

**4.** Verfahren nach Anspruch 2, welches den Schritt des Auffrischens einer Reservierung von Ressourcen enthält, wobei diese Reservierung während einer früheren Auffrischungsperiode vorgenommen wurde, und den Schritt des Nicht-Auffrischens reservierter Ressourcen in jeder DiffServ-Domäne enthält, wobei diese Ressourcen in einer nächsten Auffrischungsperiode freigegeben werden müssen.

**5.** Verfahren nach Anspruch 1, wobei der Bandbreitenbroker (1105; 1106; 1107) in der Lage ist, ein RSVP-Aggregations-Protokoll zu verwenden, wobei das Verfahren den Schritt des Verwaltens gespeicherter RSVP-Aggregations-Zustände und der selektiven Größenänderung eines RSVP-aggregierteri Zustands gemäß einer neuen Ende-zu-Ende-RSVP-Anforderung enthält.

**6.** Verfahren nach Anspruch 1, welches den Schritt des Verwendens eines Laststeuerungsprotokolls (Load Control Protocol) und des Verwaltens von Ressourcenverfügbarkeit und Zugangssteuerung in Richtung der DiffServ-Domäne durch Verwendung eines Border-Routers (1112) enthält.

**7.** Verfahren nach Anspruch 4, welches den Schritt des Verwendens eines Banäbreitenbrokers (1105; 1106; 1107) in Kombination mit Border-Routern (1112) enthält, der den Schritt des Auffrischens einer Reservierung von Ressourcen verwaltet.

**8.** Verfahren nach Anspruch 6, wobei die Border-Router (1112) einen Reservierungszustand enthalten, welcher eine Gesamtmenge von Ressourcen speichert, welche durch das Laststeuerungsprotokoll reserviert wurden.

9. Verfahren nach Anspruch 8, wobei ein Bandbreitenbroker (1105; 1106; 1107) einen Bandbreitenbroker-Aggregator umfasst und welches das Aktualisieren des Reservierungszustands enthält, falls der Bandbreitenbroker-Aggregator eine Modifikation anfordert oder falls sich die Ressourcenbedingungen in dem DiffServ-Netz, das Core-Router enthält, plötzlich ändern.

10. Verfahren nach Anspruch 1, wobei der Schritt des Verwaltens umfasst: Verwenden eines Bandbreitenbrokers, welcher Ressourcenverfügbarkeits-Informationen durch Kommunizieren mit den Border-Routern gewinnt.

11. Verfahren nach Anspruch 10, welches den Schritt des Verwendens mehrerer Typen von Bandbreitenbrokern (1105; 1106; 1107) und Veranlassens der Bandbreitenbroker (1105; 1106; 1107), unter Verwendung von RSVP-Aggregation zu interagieren, enthält.

12. Verfahren nach Anspruch 10, welches den Schritt des Auffrischens einer Reservierung von Ressourcen enthält, wobei diese Reservierung während einer früheren Auffrischungsperiode vorgenommen wurde.

13. Netzwerksubsystem zum Bereitstellen von dynamischer Dienstgüte in einem IP- (Internet Protocol) Netzwerk, welches RSVP- (Resource Reservation Protocol) Aggregation verwendet und eine Region enthält, die eine IntServ- (Integrated Services) Architektur verwendet und mit einer Region verbunden ist, die eine DiffServ- (Differentiated Services) Architektur (1109) verwendet, wobei das Netzwerksubsystem umfasst:

einen Edge-Router (1103; 1104) in der IntServ-Region (1108),
einen Border-Router (1112) und einen Core-Router in der DiffServ-Region (1109), und
einen Bandbreitenbroker (1105; 1106; 1107), welcher den Edge-Router (1103; 1104) in der IntServ-Region (1108) mit dem Border-Router (1112) in der DiffServ-Region (1109) koppelt, wobei der Bandbreitenbroker (1105; 1106; 1107) direkt mit dem Border-Router (1112) kommuniziert, ohne mit dem Core-Router in der DiffServ-Region (1109) zu kommunizieren, und wobei der Bandbreitenbroker (1105; 1106; 1107) umfasst: Mittel zum Speichern und Verwalten von RSVF-Aggregations-zuständen unter Verwendung des RSVP-Aggregations-Protokolls.

14. Netzwerksubsystem nach Anspruch 13, wobei die DiffServ-Domäne Border-Router und Core-Router enthält und wobei der Bandbreitenbroker (1105; 1106; 1107) Ressourcenverfügbarkeits-Informationen durch Kommunizieren mit Border-Routern gewinnt.

15. Netzwerksubsystem nach Anspruch 14, das mehrere Bandbreitenbroker (1105; 1106; 1107) umfasst, die Banäbreitenbroker-Aggregatoren und Bandbreitenbroker-Deagggregatoren enthalten, welche die RSVP-Aggregation steuern.

16. Netzwerksubsystem nach Anspruch 14, wobei der Bandbreitenbroker (1105; 1106; 1107) eine bereits getätigte Reservierung von Ressourcen auffrischt, wobei diese Reservierung während einer früheren Auffrischungsperiode vorgenommen wurde.

17. Netzwerksubsystem nach Anspruch 13, wobei ein Border-Router (1112) in der Lage ist, ein Laststeuerungsprotokoll zu verwenden, und wobei ein Border-Router (1112) das Verwalten von Ressourcenverfügbarkeit und Zugangssteuerung in Richtung der DiffServ-Domäne ermöglicht.

18. Bandbreitenbroker (1105; 1106; 1107) zum Bereitstellen von dynamischer Dienstgüte in einem IP- (Internet Protocol) Netzwerk, welches RSVP- (Resource Reservation Protocol) Aggregation verwendet und eine Region enthält, die eine IntServ- (Integrated Services) Architektur (1108) verwendet und mit einer Region verbunden ist, die eine DiffServ- (Differentiated Services) Architektur (1109) verwendet, wobei die IntServ-Region (1108) einen Edge-Router (1103; 1104) enthält und die DiffServ-Region (1109) einen Border-Router (1112) und einen Core-Router enthält, wobei der Bandbreitenbroker (1105; 1106; 1107) umfasst;

Mittel zum Koppeln mit dem Edge-Router (1103; 1104) in der IntServ-Region (1108) und mit dem Border-Router (1112) in der DiffServ-Region, wobei der Bandbreitenbroker (1105; 1106; 1107) direkt mit dem Border-Router (1112) kommuniziert, ohne mit dem Core-Router in der DiffServ-Region (1109) zu kommunizieren, und
Mittel zum Speichern und Verwalten von RSVP-Aggregations-Zuständen unter Verwendung des RSVP-Aggregations-Protokolls.

**19.** Bandbreitenbroker nach Anspruch 18, wobei die DiffServ-Domäne Border-Router und Core-Router enthält und wobei der Bandbreitenbroker (1105; 1106; 1107) Ressourcenverfügbarkeits-Informationen durch Kommunizieren mit Border-Routern gewinnt.

**20.** Bandbreitenbroker nach Anspruch 19, der als ein Bandbreitenbroker-Aggregator oder ein Bandbreitenbroker-Deaggregator konfiguriert ist, welcher die RSVP-Aggregation steuert.

**21.** Bandbreitenbroker nach Anspruch 19, wobei der Bandbreitenbroker (1105; 1106; 1107) eine bereits getätigte Reservierung von Ressourcen auffrischt, wobei diese Reservierung während einer früheren Auffrischungsperiode vorgenommen wurde.

**Revendications**

**1.** Procédé de fourniture d'une qualité de service dynamique dans un réseau IP (protocole Internet) qui gère des paquets IP et étant du type qui utilise une agrégation RSVP (protocole de réservation de ressources) et inclut une région utilisant une architecture Intserv (services intégrés) (1108) connectée à une région utilisant une architecture Diffserv (services différenciés) (1109), ladite région Intserv (1108) incluant un routeur périphérique (1103 ; 1104) et ladite région Diffserv (1109) incluant un routeur frontalier (1112) et un routeur central, ledit procédé comprenant les étapes consistant à :

interfacer un courtier de bande passante (1105 ; 1106 ; 1107) avec le routeur périphérique (1103 ; 1104) dans la région IntServ (1108) et le routeur frontalier (1112) dans la région Diffserv (1109), ledit courtier de bande passante communiquant directement avec le routeur frontalier (1112) sans communiquer avec le routeur central dans la région Diffserv (1109), et
mémoriser et gérer des états d'agrégation RSVP dans le courtier de bande passante en utilisant le protocole d'agrégation RSVP.

**2.** Procédé selon la revendication 1, dans lequel l'étape de gestion comprend l'utilisation d'un courtier de bande passante qui obtient une information de disponibilité de ressources en communiquant seulement avec les routeurs frontaliers (1112), ledit courtier de bande passante (1105 ; 1106 ; 1107) possédant aussi une fonctionnalité d'agrégateur et de désagrégateur.

**3.** Procédé selon la revendication 2, incluant l'étape consistant à utiliser une pluralité de types de courtiers de bande passante (1105 ; 1106 ; 1107) et amener les courtiers de bande passante (1105 ; 1106 ; 1107) à interagir en utilisant une agrégation RSVP.

**4.** Procédé selon la revendication 2, incluant l'étape consistant à rafraîchir une réservation de ressources, laquelle réservation a été accomplie pendant une période de rafraîchissement précédente, et incluant l'étape consistant à ne pas rafraîchir les ressources réservées dans chaque domaine Diffserv, lesquelles ressources doivent être libérées pendant une période de rafraîchissement suivante.

**5.** Procédé selon la revendication 1, dans lequel ledit courtier de bande passante (1105 ; 1106 ; 1107) est en mesure d'utiliser un protocole d'agrégation RSVP, le procédé incluant l'étape consistant à gérer les états d'agrégation RSVP mémorisés, et de redimensionner sélectivement un état agrégé RSVP relatif à une nouvelle demande RSVP de bout en bout.

**6.** Procédé selon la revendication 1, incluant l'étape consistant à utiliser un protocole de commande de charge, et à gérer, en utilisant un routeur frontalier (1112), une disponibilité de ressources et une commande d'admission dans la direction dudit domaine Diffserv.

**7.** Procédé selon la revendication 4, incluant l'étape consistant à utiliser un courtier de bande passante (1105 ; 1106 ; 1107) en combinaison avec des routeurs frontaliers (1112) gérant l'étape de rafraîchissement de la réservation de ressources.

**8.** Procédé selon la revendication 6, dans lequel les routeurs frontaliers (1112) contiennent un état de réservation qui mémorise une quantité totale de ressources qui sont réservées par le protocole de commande de charge.

9. Procédé selon la revendication 8, dans lequel un courtier de bande passante (1105 ; 1106 ; 1107) comprend un agrégateur de courtier de bande passante et incluant la mise à jour de l'état de réservation si l'agrégateur de courtier de bande passante demande une modification ou si les conditions de ressources dans le réseau Diffserv incluant des routeurs centraux changent brusquement.

10. Procédé selon la revendication 1, dans lequel l'étape de gestion comprend : l'utilisation d'un courtier de bande passante, qui obtient une information de disponibilité de ressource en communiquant avec les routeurs frontaliers.

11. Procédé selon la revendication 10, incluant l'étape consistant à utiliser une pluralité de types de courtiers de bande passante (1105 ; 1106 ; 1107) et amener les courtiers de bande passante (1105 ; 1106 ; 1107) à interagir en utilisant une agrégation RSVP.

12. Procédé selon la revendication 10, incluant l'étape de rafraîchissement d'une réservation de ressources, laquelle réservation a été accomplie pendant une période de rafraîchissement précédente.

13. Sous-système de réseau pour fournir une qualité de service dynamique dans un réseau IP (protocole Internet) qui utilise une agrégation RSVP (protocole de réservation de ressources) et inclut une région utilisant une architecture Intserv (services intégrés) connectée à une région utilisant une architecture Diffserv (services différenciés) (1109), ledit sous-système de réseau comprenant ;

un routeur périphérique (1103 ; 1104) dans la région Intserv (1108) ;
un routeur frontalier (1112) et un routeur central dans la région Diffserv (1109), et
un courtier de bande passante (1105 ; 1106 ; 1107) qui interface le routeur périphérique (1103 ; 1104) dans la région Intserv (1108) avec le routeur frontalier (1112) dans la région Diffserv (1109), ledit courtier en bande passante (1105 ; 1106 ; 1107) communiquant directement avec le routeur frontalier (1112) sans communiquer avec le routeur central dans la région Diffserv (1109) et ledit courtier de bande passante (1105 ; 1106 ; 1107) comprenant : des moyens pour mémoriser et gérer des états d'agrégation RSVP en utilisant le protocole d'agrégation RSVP.

14. Sous-système de réseau selon la revendication 13, dans lequel le domaine Diffserv inclut des routeurs frontaliers et des routeurs centraux, et dans lequel le courtier de bande passante (1105 ; 1106 ; 1107) obtient une information de disponibilité de ressources en communiquant avec les routeurs frontaliers.

15. Sous-système de réseau selon la revendication 14, comprenant une pluralité de courtiers de bande passante (1105 ; 1106 ; 1107) incluant des agrégateurs de courtier de bande passante et des désagrégateurs de courtier de bande passante commandant l'agrégation RSVP.

16. Sous-système de réseau selon la revendication 14, dans lequel le courtier de bande passante (1105 ; 1106 ; 1107) rafraîchit une réservation de ressources déjà faite, laquelle réservation a été accomplie pendant une période de rafraîchissement précédente.

17. Sous-système de réseau selon la revendication 13, dans lequel un routeur frontalier (1112) est en mesure d'utiliser un protocole de commande de charge, et dans lequel un routeur frontalier (1112) permet de gérer une disponibilité de ressources et une commande d'admission dans à direction dudit domaine Diffserv.

18. Courtier de bande passante (1105 ; 1106 ; 1107) pour fournir une qualité de service dynamique dans un réseau IP (protocole Internet) qui utilise une agrégation RSVP (protocole de réservation de ressources) et inclut une région utilisant une architecture Intserv (services intégrés) (1108) connectée à une région utilisant une architecture Diffserv (services différenciés) (1109), ladite région Intserv (1108) incluant un routeur périphérique (1103 ; 1104) et ladite région Diffserv (1109) incluant un routeur frontalier (1112) et un routeur central, ledit courtier de bande passante (1105 ; 1106 ; 1107) comprenant :

des moyens pour s'interfacer avec le routeur périphérique (1103 ; 1104) dans la région Intserv (1108) et avec le routeur frontalier (1112) dans la région Diffserv, ledit courtier de bande passante (1105 ; 1106 ; 1107) communiquant directement avec le routeur frontalier (1112) sans communiquer avec le routeur central dans la région Diffserv (1109) et
des moyens pour mémoriser et gérer des états d'agrégation RSVP en utilisant le protocole d'agrégation RSVP.

**19.** Courtier de bande passante selon la revendication 18, dans lequel le domaine Diffserv inclut des routeurs frontaliers et des routeurs centraux, et dans lequel le courtier de bande passante (1105 ; 1106 ; 1107) obtient une information de disponibilité de ressources en communiquant avec les routeurs frontaliers.

**20.** Courtier de bande passante selon la revendication 19, configuré comme un agrégateur de courtier de bande passante ou un désagrégateur de courtier de bande passante commandant l'agrégation RSVP.

**21.** Courtier de bande passante selon la revendication 19, dans lequel le courtier de bande passante (1105 ; 1106 ; 1107) rafraîchit une réservation de ressources déjà faite, laquelle réservation a été accomplie pendant une période de rafraîchissement précédente.

RSVP/Intserv framework

*FIG. 1*

*FIG. 2*

Differentiated services framework

RSVP aggregation signaling flow for first E2E flow

# FIG. 3

IP tunnel or "RSVP E2E IGNORE" region

RSVP aggregation signaling flow for subsequent E2E flow
without reservation resizing

*FIG. 4*

RSVP aggregation signaling flow for subsequent E2E flow
with reservation resizing

## FIG. 5

RSVP aggregation signaling flow for E2E release

## FIG. 6

Resource reservation and resource release procedures in Load Control

## FIG. 7

End to End QoS

801 Source

802 Receiver

803 Non-Diffserv Region

ER1 805

804 Non-Diffserv Region

806 ER2

808 BR1

BR2 808

807 Diffserv Region

Intserv/Diffserv framework

*FIG. 8*

Intserv over Diffserv framework using RSVP aggregation within each Diffserv domain

*FIG. 9*

EP 1 312 226 B1

Example of full meshed Diffserv domain with three Border Routers and one Core Router

## FIG. 10

FIG. 11

Proposed Intserv/Diffserv framework

Sender 1101

End to End QoS

Receiver 1102

E2ERSVP messages 1113

Aggregated RSVP messages 1110

Intserv Region 1108

Intserv Region 1108

ER1 1103

ER2 1104

BBA/D 1105

BB 1106 1107

BBD/A

CCPS or SNMP 1118

Load Control 1111

Diffserv Region 1 1109

Diffserv Region 2 1109

Diffserv Region 3 1109

BR1 1112

BR2 1112

BR1 1112

BR2 1112

BR1 1112

BR2 1112

Example of the proposed Intserv/Diffserv operation when RSVP aggregated states are not available in the BB's

**FIG. 12**

| 1301 | 1312 | 1305 | 1314 | 1309 | 1312 | 1307 | 1314 | 1302 |
|---|---|---|---|---|---|---|---|---|
| Sender/ Edge Router | Ingress (BR) | (BBA) Aggregator | Eggress (BR) | Intermediate Diffserv domains | Ingress (BR) | (BBD) Deaggregator | Egress (BR) | Receiver/ Edge Router |

━━━━━ IP tunnel or "RSVP IGNORE" region          BR=Border ROUTER          BB=Bandwidth Broker

Example of the proposed Intserv/Diffserv operation when RSVP
aggregated states are available in the BB's and no resizing is needed

## FIG. 13

IP tunnel or "RSVP IGNORE" region        BR=Border ROUTER        BB=Bandwidth Broker

Example of the proposed Intserv/Diffserv operation when RSVP
aggregated states are available in the BB's and resizing is needed

*FIG. 14*

BR=Border ROUTER          BB=Bandwidth Broker

Example of refreshment of the reserved resources

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0030295 A

**Non-patent literature cited in the description**

- **BERNET, Y. ; BINDER, J. ; BLAKE, S. ; CARL-SON, M. ; DAVIES, E. ; OHLMAN, B. ; WERMA, D. ; WANG, ZH. ; WEISS, W.** *A Framework for Differentiated Services,* February 1999, draftietf-diffserv-framework-02.txt
- **BERNET, Y. ; YAVATKAR, R. ; FORD, P. ; BAKER, F. ; ZHANG, L. ; SPEER, M. ; BRADEN, R. ; DAVIE, B. ; FELSTAINE, E.** *Framework for Integrated Services operation over Diffserv Networks,* March 2000, draft-ietf-issll-diffserv-rsvp-04.txt
- **DURHAM, D. ; YAVATKAR, R.** Inside the Internet's Resource reSerVation Protocol: Foundations for Quality of Service. John Willey & Sons, Inc, 1999
- **BRADEN, R. ; CLARK, D. ; SHENKER, S.** Integrated Services in the Internet Architecture: An Overview. *IETF RFC1633,* 1994
- **CASE, J. ; MCCLOGHRIE, K. ; ROSE, M. ; S. WALDBUSSER.** Protocol Operations for Version 2 of the Simple Network Managment Protocol (SYMPv2). *RFC,* 1996, vol. 1905
- **BRADEN, R. ; ZHANG, L. ; BERSON, S. ; HER-ZOG, S. ; JAMIN, S.** Resource Reservation Protocol (RSVP) Version 1 Functional Specification. *IETF RFC,* 1997, vol. 2205
- **WROCLAWSKI, J.** The use of RSVP with IETF integrated Services. *IETF RFC,* 1997, vol. 2210
- **BLAKE, S. ; BLACK, D. ; CARLSON, M. ; DAVIES, E. ; WANG, ZH. ; WEISS, W.** An architecture for Differentiated Services. *IETF RFC,* 1998, vol. 2475
- **HEINANEN, J. ; BAKER, F. ; WEISS, W. ; WRO-CLAWSKI, J.** Assured Forwarding PHB group. *IETF RFC,* 1999, vol. 2597
- **JACOBSON, V. ; NICHOLS, K. ; PODURI, K.** An Expedited Forwarding PHB. *IETF RFC,* 1999, vol. 2598
- **NICHOLS, K. ; JACOBSON, V. ; ZANG, L.** A two-bit Differentiated Services Architecture for the Internet. *IETF RFC,* 1999, vol. 2638
- **DURHAM, D. ; BOYLE, J. ; COHEN, R. ; HERZOG, S. ; RAJA, R. ; SASTRY, A.** The COPS (Common Open Policy Service) Protocol. *IETF RFC,* January 2000